# EUROPEAN PATENT APPLICATION

(11) **EP 4 588 608 A1**
(43) Date of publication of application: **23.07.2025**
(21) Application number: 22966910.6
(22) Date of filing: 01.12.2022
(51) Int. Cl.: B23K 37/00

(54) **WELDING APPARATUS AND USE METHOD OF WELDING APPARATUS**

(71) Applicant: CONTEMPORARY AMPEREX TECHNOLOGY (HONG KONG) LIMITED, Hong Kong (HK)
(72) Inventor: ZHANG, Lizhu, Ningde, Fujian 352100 (CN); FAN, Xiang, Ningde, Fujian 352100 (CN); XU, Yueming, Ningde, Fujian 352100 (CN); WANG, Quanwei, Ningde, Fujian 352100 (CN); LIN, Gang, Ningde, Fujian 352100 (CN)
(74) Representative: Kraus & Lederer PartGmbB
(86) International application number: PCT/CN2022/135978
(87) International publication number: WO 2024/113321

(57) **Abstract**

The present application discloses a welding device and a method for using a welding device. The welding device includes a loading station, a welding station and a unloading station, and further includes a transport mechanism, a positioning mechanism, a pressing mechanism and a welding mechanism. The transport mechanism is configured to transport a workpiece between the loading station, the welding station and the unloading station. The positioning mechanism is configured to position the workpiece when the workpiece is transported between the loading station, the welding station and the unloading station, and the positioning mechanism is arranged on the transport mechanism. The pressing mechanism is arranged at the welding station and configured to press the workpiece during welding, and the pressing mechanism and the positioning mechanism are arranged at opposite ends of the workpiece. The welding mechanism is arranged at the welding station and configured to weld the workpiece. The technical solution of the present application can improve the work efficiency of the welding device.

## Description

### TECHNICAL FIELD

The present application relates to the technical field of welding, and in particular, to a welding device and a method for using a welding device.

### BACKGROUND

A battery generally includes a housing and an electrode assembly arranged in the housing. After the electrode assembly is placed in the housing, it is necessary to use a welding device to perform welding and sealing around the entire end portion of the battery. However, during the use of welding device in the related art, when a workpiece is conveyed to different stations, the posture of the battery needs to be adjusted accordingly before the corresponding processing can be carried out. This makes the continuity of processing the battery relatively low and affects the work efficiency of such a welding device.

### SUMMARY OF THE INVENTION

A main objective of the present application is to provide a welding device intended to improve the work efficiency of the welding device.

In order to achieve the above objective, the welding device proposed in the present application includes a loading station, a welding station and an unloading station, and the welding device further includes:
a transport mechanism configured to transport a workpiece between the loading station, the welding station and the unloading station;
a positioning mechanism configured to position the workpiece when the workpiece is transported between the loading station, the welding station and the unloading station, the positioning mechanism being arranged on the transport mechanism;
a pressing mechanism arranged at the welding station and configured to press the workpiece during welding, the pressing mechanism and the positioning mechanism being arranged at opposite ends of the workpiece; and
a welding mechanism arranged at the welding station and configured to weld the workpiece.

During the use of the welding device in this solution, the workpiece may be placed on the positioning mechanism that is arranged on the transport mechanism, so as to position the motive when being transported by the transport mechanism to ensure the transport stability thereof. When the workpiece is transported to the welding station by the transport mechanism, the workpiece may be pressed by the pressing mechanism that is arranged at the welding station, such that the workpiece can be stably limited at the welding station. In this case, the welding mechanism that is also arranged at the welding station may weld the workpiece to complete the welding work on the workpiece. Moreover, for the workpiece between the loading station, the welding station and the unloading station, the workpiece is positioned by one positioning mechanism, so that the placement posture of the workpiece at each station can be consistent. In other words, the workpiece has a consistent placement posture whether it is in the loading station, in the welding station, or in the unloading station. In this way, when the welding device performs corresponding processing at each station, there is no need to modify or replace the positioning mechanism and adjust the placement posture of the workpiece, so that the continuity of processing the workpiece by the welding device can be improved, thereby improving the work efficiency of the welding device.

In an embodiment of the present application, the welding mechanism is configured to perform spin welding on the workpiece.

In this case, the welding mechanism can perform spin welding on the workpiece, so that a more continuous movement can be performed when welding is performed on the entire body of the workpiece, thereby contributing to further improving the welding efficiency of the welding device.

In an embodiment of the present application, the welding mechanism includes:
a rotating driving member; and
a welding member connected to the rotating driving member, wherein the rotating driving member drives the welding member to rotate to perform spin welding on the workpiece.

In this case, the rotating driving member directly drives the welding member to perform the spin welding on the workpiece by the welding mechanism, so that the workpiece remains fixed without the need for corresponding movement. This is helpful to ensure the stability of the workpiece being limited and fixed, so that the welding mechanism can weld the workpiece more stably.

In an embodiment of the present application, the pressing mechanism is further configured to drive the workpiece to rotate, such that the welding mechanism performs spin welding on the workpiece.

In this case, in addition to having the function of pressing and limiting the workpiece, the pressing mechanism can further provide power to drive the workpiece to rotate, so as to perform the spin welding on the workpiece by the welding mechanism. Moreover, the pressing mechanism may be located at one end of the workpiece in a rotation axis thereof, such that the pressing mechanism can be arranged in a fixed manner without interfering with other mechanisms due to movement, thereby improving the stability of the mechanisms of the welding device.

In an embodiment of the present application, the pressing mechanism includes:
a first driving member; and
a pressing member connected to the first driving member and configured to abut against the workpiece, wherein the first driving member is capable of driving the pressing member to rotate and then driving the workpiece to be spin welded.

In this case, power can be provided by the first driving member, and the pressing member can better adaptively abut against the workpiece, thereby contributing to improving the pressing and limiting of the pressing mechanism on the workpiece and the stability of the rotation driven by the pressing mechanism.

In an embodiment of the present application, the pressing mechanism further comprises a bearing seat, a connecting shaft and a coupling, wherein the bearing seat is connected to the pressing member, and the connecting shaft has one end connected to the bearing seat and the other end connected to an output shaft of the first driving member via the coupling;
and/or the pressing member is removably connected to the first driving member;
and/or the pressing member is made of copper.

In this case, the connection of the connecting shaft is facilitated by means of the coupling, to provide an extension distance through the connecting shaft, so that when the pressing member is mounted at the end of the connecting shaft away from an electric motor via the bearing seat, the pressing member can better abut against the workpiece. The removable arrangement of the pressing member can facilitate the repairing and replacement of the pressing member. Setting the material of the pressing member to copper can make it have a better thermal conductivity, so that the workpiece can be dissipated in a timely manner when the workpiece is welded.

In an embodiment of the present application, the pressing mechanism and the positioning mechanism are respectively located at two ends of the workpiece in a height direction thereof.

In this case, the workpiece can be conveyed in a vertical orientation, which can make it easier for the welding mechanism to perform spin welding on the workpiece placed in the vertical orientation.

In an embodiment of the present application, the positioning mechanism comprises an accommodating member on which a first accommodating groove is formed, the first accommodating groove is configured to accommodate the workpiece, and the accommodating member is connected to the transport mechanism.

In this case, the workpiece can be accommodated and limited by the first accommodating groove, thereby contributing to improving the stability of positioning the workpiece by the positioning mechanism, so as to improve the stability of the workpiece being conveyed.

In an embodiment of the present application, the accommodating member is further provided with an avoidance hole in communication with the first accommodating groove, and the welding device further comprises a push assembly, wherein
a part of the push assembly is configured to pass through the avoidance hole and drive the workpiece to approach the pressing mechanism, such that the pressing mechanism and the push assembly cooperate with each other to clamp the workpiece.

In this case, the workpiece can be separated from a groove bottom wall of the first accommodating groove of the accommodating member by means of the push assembly, so as to reduce the wear of the workpiece during rotation.

In an embodiment of the present application, the push assembly includes:
a second driving member;
a cam connected to the second driving member and capable of being driven to rotate by the second driving member; and
a push rod capable of being abutted against and driven by the cam to pass through the avoidance hole when the cam rotates.

In this case, it is not necessary to distribute the components of the push assembly in sequence on a driving path of the workpiece, contributing to improving the compactness of the distribution of the push assembly.

In an embodiment of the present application, a lower end of the push rod is provided with an abutment surface configured to abut against the cam and arranged in the form of an arc-shaped surface;
and/or the push assembly further comprises a guide rail and a guide block, wherein the guide rail is configured to extend in a moving direction of the push rod, and the guide block is connected to the push rod and is slidably connected to the guide rail;
and/or an upper end of the push rod is provided with a rotatable push head configured to abut against the workpiece.

In this case, the push rod abuts against the cam by means of the abutment surface arranged in the form of an arc-shaped surface, so that great wear between the push rod and the cam can be avoided. The arrangement of the guide rail and the guide block can function to guide the movement of the push rod so that the workpiece can be pushed stably and effectively later. The arrangement of the rotatable push head at the upper end of the push rod prevents the workpiece from driving the push rod when the workpiece is driven to rotate by the pressing mechanism.

In an embodiment of the present application, the push assembly and the welding mechanism are movable along with the workpiece on the transport mechanism.

In this case, the push assembly and the welding mechanism can move along a transportation path of the workpiece, so that when the push assembly and the welding mechanism are working, the transport mechanism does not need to stop correspondingly, contributing to further improving the work efficiency of the welding device.

In an embodiment of the present application, the welding device further includes a clamping mechanism for clamping a side surface of the workpiece.

In this case, a side peripheral surface of the workpiece can be clamped and limited by the clamping mechanism, so that the position of the workpiece can be further corrected such that it can be accurately and stably at a preset welding position, thereby facilitating subsequent accurate welding of the workpiece by the welding mechanism.

In an embodiment of the present application, the clamping mechanism comprises at least two clamping members arranged on two sides of the workpiece.

In this case, the peripheral side of the workpiece can be more comprehensively clamped and limited by the at least two clamping members, thereby contributing to improving the clamping and limiting effect of the clamping mechanism on the workpiece.

In an embodiment of the present application, each of the clamping members comprises a fixing frame and at least two clamping wheels, wherein the at least two clamping wheels are rotatably arranged on the fixing frame, the clamping wheels of the at least two clamping members enclose a clamping space for clamping the workpiece.

In this case, the clamping mechanism can abut against the workpiece by means of the clamping wheels, and the clamping wheels can rotate, so that it is possible to prevent the clamping mechanism from causing wear on the surface of the workpiece when clamping and abutting against the side surface of the workpiece.

In an embodiment of the present application, the clamping mechanism further comprises at least two third driving members, each of the third driving members is connected to one of the clamping members, and the at least two third driving members are capable of respectively driving the at least two clamping members to approach each other so as to clamp a side peripheral surface of the workpiece.

In this case, driving the clamping members by the third driving members can implement the automatic driving of the clamping members, thereby contributing to improving the automation level of the welding device and further improving the work efficiency of the welding device.

In an embodiment of the present application, an annular feeding track is formed on the transport mechanism.

In this case, the feeding track of the transport mechanism is annular, so that the mechanisms of the welding device can be correspondingly distributed more compactly, thereby contributing to reducing the footprint of the welding device and improving the convenience of its placement.

In an embodiment of the present application, the transport mechanism includes:
a transport body, an annular feeding channel being formed on the transport body in a circumferential direction thereof, and the positioning mechanism being accommodated in the feeding channel; and
a rotating mechanism, the rotating mechanism being rotatable relative to the transport body, and the rotating mechanism being connected to the positioning mechanism to drive the positioning mechanism to move.

In this case, the feeding channel of the transport body can function to limit the positioning mechanism, thereby contributing to improving the stability of the positioning mechanism during the transportation, and the rotating mechanism can be used to drive the positioning mechanism to move.

In an embodiment of the present application, the transport body is further provided with an intake channel and a discharge channel which are in communication with the feeding channel, the intake channel is located at the loading station, and the discharge channel is located at the unloading station.

In this case, the arrangement of the intake channel and the discharge channel facilitates the conveying of the positioning mechanism and the workpiece into and out of the transport mechanism, and can improve the conveying efficiency of the positioning mechanism and the workpiece by the transport mechanism, thereby contributing to further improving the work efficiency of the welding device.

In an embodiment of the present application, the rotating mechanism comprises a rotating disk that is rotatable, and a second accommodating groove is formed on the rotating disk and configured to accommodate the workpiece located in the feeding channel.

In this case, the workpiece can be accommodated by the second accommodating groove, so as to improve the stability of the workpiece when it is driven to move while enabling the workpiece to be abutted and driven.

In an embodiment of the present application, an edge of the rotating disk is recessed to form the second accommodating groove.

In this case, the edge of the rotating disk is recessed into the second accommodating groove, so that there is no need to use other mechanisms to drive the workpiece to enter the second accommodating groove, improving the convenience of the workpiece entering the second accommodating groove.

In an embodiment of the present application, the pressing mechanism is located on one side of the rotating mechanism in a height direction thereof.

In this case, the arrangement of the pressing mechanism above or below the rotating mechanism can make the distribution of the pressing mechanism and the rotating mechanism more compact, thereby contributing to further reducing the footprint of the welding device and improving the convenience of its subsequent placement.

In an embodiment of the present application, the workpiece is a columnar battery cell.

In this case, since the workpiece is a columnar battery cell, which facilitates the positioning mechanism to position the battery cell and the pressing mechanism to press the battery cell.

In an embodiment of the present application, the workpiece is a cylindrical battery cell.

In this case, since the workpiece is cylindrical, its entire body is consistent, which facilitates the welding mechanism to perform spin welding on its entire body.

The present application also proposes a method for using a welding device, the welding device being a welding device as described in any of the embodiments, wherein the method for using a welding device comprises:
transporting, by the transport mechanism, a workpiece between the loading station, the welding station and the unloading station, and positioning, by the positioning mechanism, the workpiece during transportation;
pressing, by the pressing mechanism, the workpiece that is transported to the welding station; and
welding the workpiece by the welding mechanism.

In this solution, the workpiece is transported between the loading station, the welding station and the unloading station by the transport mechanism, and the workpiece is positioned by one positioning mechanism. In this way, the placement posture of the workpiece at each station can be consistent, so that when the welding device performs corresponding processing at each station, there is no need to replace the positioning mechanism for the workpiece and adjust the placement posture of the workpiece, the continuity of processing the workpiece by the welding device can be improved, thereby improving the work efficiency of the welding device.

### DESCRIPTION OF DRAWINGS

In order to more clearly illustrate the technical solutions in the embodiments of the present application or in the prior art, the drawings to be used in the description of the embodiments of the present application or the prior art will be described briefly below. Obviously, the drawings in the following description are merely for some embodiments of the present application. For those of ordinary skill in the art, other drawings can also be obtained according to the structures shown in these drawings without involving any inventive effort.
Fig. 1 is a schematic structural diagram of an embodiment of a welding device of the present application;
Fig. 2 is a schematic structural diagram of the welding device in Fig. 1 from another perspective;
Fig. 3 is a partial schematic structural diagram of the welding device in Fig. 1;
Fig. 4 is an exploded schematic structural diagram of a partial structure of the welding device in Fig. 3;
Fig. 5 is a structural schematic diagram of an embodiment of an accommodating member of the welding device of the present application;
Fig. 6 is a structural schematic diagram of an embodiment of a transport mechanism of the welding device of the present application; and
Fig. 7 is a schematic flowchart of an embodiment of a method for using a welding device of the present application.

**Description of reference numerals:**

| Reference numerals | Name | Reference numerals | Name |
|---|---|---|---|
| 100 | Welding device | 37 | Connecting shaft |
| 100a | Loading station | 39 | Coupling |
| 100b | Welding station | 40 | Welding mechanism |
| 100c | Unloading station | 50 | Push assembly |
| 10 | Transport mechanism | 53 | Cam |
| 11 | Transport body | 55 | Push rod |
| 110 | Feeding channel | 551 | Abutment surface |
| 111 | Intake channel | 553 | Roller |
| 113 | Discharge channel | 555 | Push head |
| 13 | Rotating mechanism | 557 | Bearing |
| 131 | Rotating disk | 57 | Guide rail |
| 133 | Second accommodating groove | 59 | Guide block |
| 20 | Positioning mechanism | 60 | Clamping mechanism |
| 21 | Accommodating member | 61 | Clamping member |
| 211 | First accommodating groove | 611 | Fixing frame |
| 213 | Avoidance hole | 613 | Clamping wheel |
| 30 | Pressing mechanism | 63 | Third driving member |
| 31 | First driving member | 65 | Clamping space |
| 33 | Pressing member | 70 | Workpiece |
| 35 | Bearing seat | | |

The implementations, functional characteristics and advantages of the objective of the present application will be further described with reference to the accompanying drawings in conjunction with the embodiments.

### DETAILED DESCRIPTION

The technical solutions in the embodiments of the present application will be clearly and completely described below with reference to the accompanying drawings of the embodiments of the present application. Apparently, the embodiments described are merely some rather than all of the embodiments of the present application. On the basis of the embodiments of the present application, all other embodiments obtained by those of ordinary skill in the art without involving any inventive effort shall fall within the scope of protection of the present application.

It should be noted that all directional indications (such as up, down, left, right, front, back...) in the embodiments of the present application are only configured to explain the relative positional relationship and movement between components in a certain posture (as shown), and when the specific posture changes, the directional indications also change accordingly.

In the present application, unless otherwise explicitly specified and limited, the terms such as "connection" and "fixation" should be broadly understood. For example, the term "fixation" may be a fixed connection or a detachable connection or be integrated; or may be a mechanical connection or an electrical connection; or may be a direct connection or an indirect connection through an intermediate medium, or may be a communication between the interior of two elements or the interaction of two elements, unless otherwise specifically defined. For those of ordinary skill in the art, the specific meanings of the above terms in the present application can be understood according to specific situations.

In addition, the descriptions involving "first", "second", and the like in the present application are used for description only and cannot be construed as indicating or implying relative importance thereof or implicitly indicating the number of technical features indicated. Therefore, the features defined with "first" and "second" may explicitly or implicitly include at least one of the features. In addition, the meaning of "and/or" herein includes three parallel solutions. Taking "A and/or B" as an example, it includes solution A, solution B, or a solution satisfying both of A and B. In addition, the technical solutions between the various embodiments may be combined with each other, but should be based on what may be implemented by those of ordinary skill in the art. When a combination of technical solutions is contradictory or cannot be implemented, it should be considered that the combination of technical solutions does not exist, and is not within the scope of protection of the present application.

The applicant has found that during the production of a battery, the battery generally includes a housing and an electrode assembly arranged in the housing. After the electrode assembly is placed in the housing, it is necessary to use a welding device to perform welding and sealing around the entire end portion of the battery. During the use of welding device in the related art, when a workpiece is conveyed to different stations, the posture of the battery needs to be adjusted accordingly before the corresponding processing can be carried out. This makes the continuity of processing the battery relatively low and affects the work efficiency of such a welding device.

Based on the above considerations, in order to improve the work efficiency of the welding device, the applicant proposed a new welding device which uses one positioning mechanism for positioning in each of a loading station, a welding station and an unloading station so that there is no need to replace the positioning mechanism for and adjust the posture of a welding material, improving the work efficiency of the welding device.

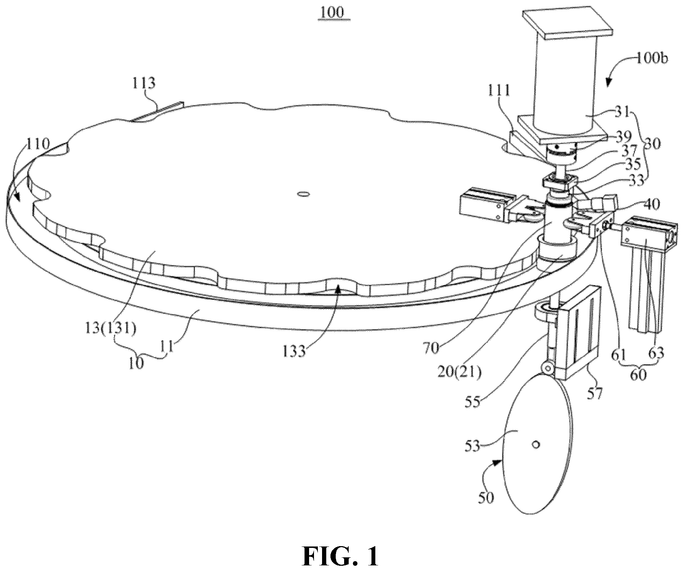

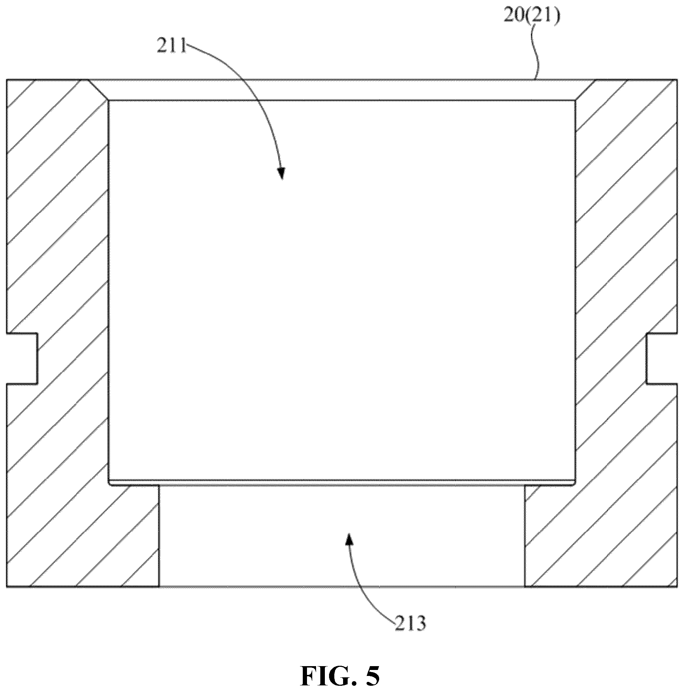

In an embodiment of the present application, referring to Figs. 1 to 6, a welding device 100 includes a loading station 100a, a welding station 100b and an unloading station 100c. The welding device 100 further includes: a transport mechanism 10, a positioning mechanism 20, a pressing mechanism 30 and a welding mechanism 40. The transport mechanism 10 is configured to transport the workpiece 70 between the loading station 100a, the welding station 100b and the unloading station 100c. The positioning mechanism 20 is configured to position the workpiece 70 when the workpiece 70 is transported between the loading station 100a, the welding station 100b and the unloading station 100c, and the positioning mechanism 20 is arranged on the transport mechanism 10. The pressing mechanism 30 is arranged at the welding station 100b, and the pressing mechanism 30 is configured to press the workpiece 70 during welding. The pressing mechanism 30 and the positioning mechanism 20 are arranged at opposite ends of the workpiece 70. The welding mechanism 40 is arranged at the welding station 100b, and the welding mechanism 40 is configured to weld the workpiece 70.

The transport mechanism 10 of the welding device 100 described above may be configured to transport the positioning mechanism 20 and the workpiece 70, and the loading station 100a, the welding station 100b and the unloading station may be respectively formed on a transportation path of the transport mechanism 10. As the name suggests, the loading station 100a is a position where the workpiece 70 is to be placed on the transport mechanism 10. The workpiece 70 may be placed manually or, of course, may be placed automatically by a robot, etc. This is not limited in the present application. The welding station 100b is the position where the workpiece 70 is to be welded, and is located downstream of the loading station 100a on the conveying path of the transport mechanism 10. The unloading station 100c is a position where the workpiece 70 is to be taken out from the transport mechanism 10. Likewise, the workpiece 70 may be taken out manually or, of course, may be taken out automatically by a robot, etc. On the conveying path of the transport mechanism 10, the unloading station 100c is located downstream of the welding station 100b. An output path of the transport mechanism 10 may be linearly distributed or, of course, may be annularly distributed. This is not specifically limited in the present application. The specific conveying method of the transport mechanism 10 may be implemented by means of a conveyor belt, by a conveying roller, or by a turntable, etc. The specific structure of the transport mechanism is limited in the present application, as long as the conveying of the positioning mechanism 20 and the workpiece 70 can be ensured.

The positioning mechanism 20 may be configured to position the workpiece 70 when the workpiece 70 is conveyed by the transport mechanism 10, to ensure that the workpiece 70 can be stably and accurately transported between various stations. The positioning mechanism 20 can position the workpiece 70 by accommodating the workpiece 70 or, of course, by clamping the workpiece 70. This is not specifically limited in the present application, as long as it is ensured that the positioning mechanism 20 can position the workpiece 70 during the conveying.

The pressing mechanism 30 may be configured to press and limit the workpiece 70 when the workpiece 70 is transported to the welding station 100b, so that the workpiece 70 can be stably limited at the welding station 100b, facilitating subsequent welding work of the workpiece. Moreover, the pressing mechanism 30 and the positioning mechanism 20 are respectively arranged at opposite ends of the workpiece 70, so that the entire body of the workpiece 70 can be better exposed, facilitating subsequent welding of the entire body of the workpiece 70. When the workpiece 70 is conveyed in a vertical orientation, the pressing mechanism 30 and the positioning mechanism 20 may be respectively arranged at opposite ends of the workpiece 70 in the vertical direction. When the workpiece 70 is conveyed in a horizontal orientation, the pressing mechanism 30 and the positioning mechanism 20 may be respectively arranged at opposite ends of the workpiece 70 in the horizontal direction. This is not specifically limited in the present application, as long as the pressing mechanism 30 and the positioning mechanism 20 are arranged opposite to each other.

The welding mechanism 40 may be configured to perform welding work on the workpiece 70 after the workpiece 70 is conveyed to the welding station 100b and the pressing mechanism 30 presses and limits the workpiece 70. Since the welding principle of the welding mechanism 40 is an existing technology, the specific structure and the welding principle of the welding mechanism 40 will not be described in detail. In an embodiment, the welding mechanism 40 may be a laser welder in order to improve the welding efficiency and reduce the deformation of the workpiece 70 caused by welding. Further, it should be noted that the welding device 100 of the present application may be used for sealing and welding a battery as mentioned above, or, of course, may be used for welding other boxes or products. The objects to which the welding device 100 can be applied are not specifically limited.

During the use of the welding device 100 in this solution, the workpiece 70 may be placed on the positioning mechanism 20 that is arranged on the transport mechanism 10, so as to position the motive when being transported by the transport mechanism 10 to ensure the transport stability thereof. When the workpiece 70 is transported to the welding station 100b by the transport mechanism 10, the workpiece 70 may be pressed by the pressing mechanism 30 that is arranged at the welding station 100b, such that the workpiece 70 can be stably limited at the welding station 100b. In this case, the welding mechanism 40 that is also arranged at the welding station 100b may weld the workpiece 70 to complete the welding work on the workpiece 70. Moreover, for the workpiece 70 between the loading station 100a, the welding station 100b and the unloading station 100c, the workpiece 70 is positioned by one positioning mechanism 20, so that the placement posture of the workpiece 70 at each station can be consistent. In other words, the workpiece has a consistent placement posture whether it is in the loading station 100a, in the welding station 100b, or in the unloading station 100c. In this way, when the welding device 100 performs corresponding processing at each station, there is no need to replace the positioning mechanism 20 for the workpiece 70 and adjust the placement posture of the workpiece 70, the continuity of processing the workpiece 70 by the welding device 100 can be improved, thereby improving the work efficiency of the welding device 100.

In an embodiment of the present application, the welding mechanism 40 is configured to perform spin welding on the workpiece 70.

By performing spin welding on the workpiece 70, it is meant that the welding mechanism 40 can rotate relative to the workpiece 70 to implement relatively continuous welding around the entire body of the workpiece 70. The welding mechanism 40 performs spin welding relative to the workpiece 70, which consists in that the workpiece 70 is fixed, and the welding mechanism 40 can rotate around the entire body of the workpiece 70. Of course, it is also possible that the welding mechanism 40 is fixed and the workpiece 70 itself can be rotated. This is not specifically limited in the present application, as long as it is ensured that relatively continuous welding can be performed around the entire body of the workpiece 70.

In this embodiment, by configuring the welding mechanism 40 to perform spin welding relative to the workpiece 70, a more continuous movement can be performed when welding is performed on the entire body of the workpiece 70, thereby contributing to further improving the welding efficiency of the welding device 100.

Further, when the welding mechanism 40 performing spin welding relative to the workpiece 70 is implemented by fixing the workpiece 70 and rotating the welding mechanism 40, the welding mechanism 40 includes a rotating driving member and a welding member. The welding member is connected to the rotating driving member, and the rotating driving member drives the welding member to rotate to perform spin welding on the workpiece 70.

The rotating driving member may be configured to provide power to drive the welding member to rotate circumferentially around the workpiece 70. The welding member may be configured to weld the workpiece 70, such that the entire body of the workpiece 70 can be welded during the rotation of the welding member. The rotating driving member may be a combination of an electric motor and a transmission rod. In this case, one end of the transmission rod may be connected to an output shaft of the electric motor, and the other end thereof is configured to extend in a direction perpendicular to the output shaft of the electric motor and is connected to the welding member. In this way, the welding member is eccentrically arranged with respect to the output shaft of the electric motor, so that when the electric motor drives the transmission rod to rotate, the welding member can be driven to rotate circumferentially around the workpiece 70. Of course, the rotating driving member may be a combination of an electric motor and a gear. In this case, a fixed annular guide rail surrounding the entire body of the workpiece 70 may be provided, and the annular guide rail is provided with an annularly distributed rack that meshes with the gear. The gear is connected to an output shaft of the electric motor, and the electric motor and the welding member are jointly mounted on a mounting carrier. In this way, when the electric motor drives the gear to rotate, due to the cooperation between the gear and the rack, part of the structure composed of the electric motor, the mounting carrier and the welding member can move in an extension direction of the annular guide rail, thereby driving the welding member to rotate circumferentially around the workpiece 70. Therefore, the specific structure of the rotating driving member is not limited in the present application, as long as the welding member can be driven to perform spin welding around the entire body of the workpiece 70.

In this implementation, the rotating driving member directly drives the welding member to perform the spin welding on the workpiece 70 by the welding mechanism 40, so that the workpiece 70 remains fixed without the need for corresponding movement. This is helpful to ensure the stability of the workpiece 70 being limited and fixed, so that the welding mechanism 40 can weld the workpiece more stably.

Further, when the welding mechanism 40 performing spin welding relative to the workpiece 70 is implemented by fixing the welding mechanism 40 and rotating the workpiece 70, the pressing mechanism 30 may be configured to drive the workpiece 70 to rotate, such that the welding mechanism 40 performs spin welding on the workpiece 70. In this case, referring to Figs. 1 to 3, the pressing mechanism 30 may include a first driving member 31 and a pressing member 33. The pressing member 33 is connected to the first driving member 31 and abuts against the workpiece 70. The first driving member 31 can drive the pressing member 33 to rotate and then drive the workpiece 70 to be spin welded.

The first driving member 31 may be configured to provide power to drive the pressing member 33 to rotate. The first driving member 31 may be an electric motor. The pressing member 33 may be configured to abut against and limit the workpiece 70, and when being driven, drives the workpiece 70 to rotate by the friction between the pressing member 33 and the workpiece 70, thereby enabling the welding mechanism 40 to perform spin welding on the workpiece 70. The pressing member 33 may be in the shape of a cylinder, a square prism, etc. The specific shape of the pressing member 33 is not limited in the present application, and may specifically be adaptively set according to the shape of the workpiece 70 itself, to ensure that when being driven by the first driving member 31, the pressing member can drive the workpiece 70 to rotate accordingly.

In this embodiment, the contact area between the pressing member 33 and the workpiece 70 can be increased, so that the pressing member can better adaptively abut against the workpiece 70, contributing to improving the pressing and the limiting of the pressing mechanism 30 on the workpiece 70 and the stability of the rotation driven by the pressing mechanism. Of course, the present application is not limited to this. In other embodiments, the pressing mechanism 30 may include only the first driving member 31, in which case an output shaft of the first driving member 31 directly abuts against the workpiece 70.

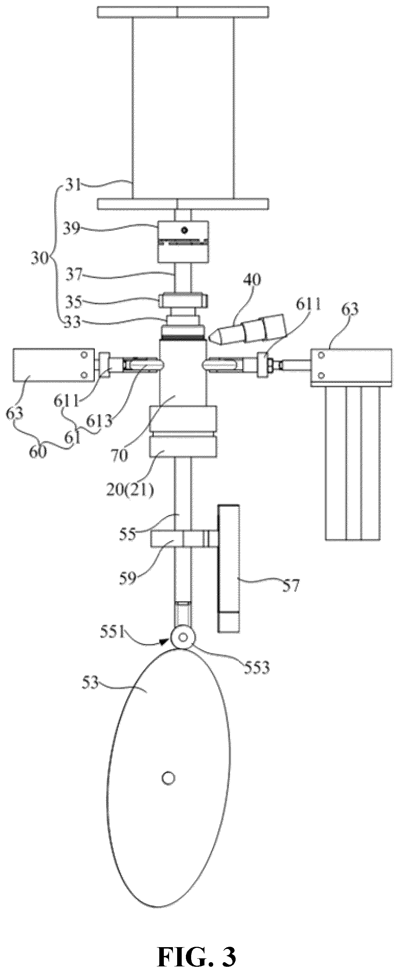

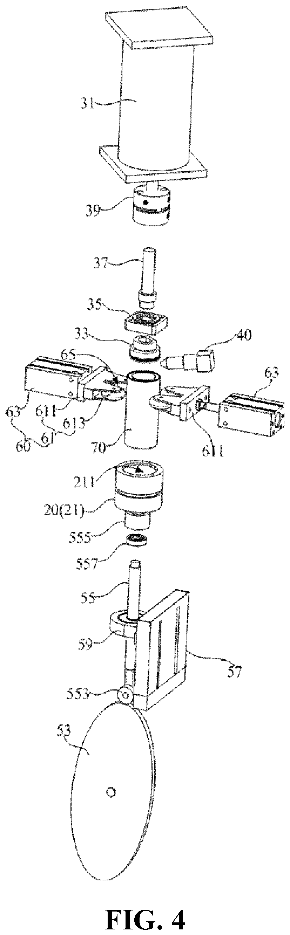

Further, referring to Figs. 3 and 4, the pressing mechanism 30 further includes a bearing seat 35, a connecting shaft 37 and a coupling 39. The bearing seat 35 is connected to the pressing member 33, and the connecting shaft 37 has one end connected to the bearing seat 35 and the other end connected to the output shaft of the first driving member 31 via the coupling 39. **In** this case, the connection of the connecting shaft 37 can be facilitated by means of the coupling 39, and an extension distance can be provided through the connecting shaft 37, so that when the pressing member 33 is mounted at the end of the connecting shaft 37 away from the electric motor via the bearing seat 35, the pressing member can better abut against the workpiece 70. Therefore, the arrangement of the bearing seat 35, the connecting shaft 37 and the coupling 39 can facilitate the assembly between them, and also achieves a reasonable spatial layout between the first driving member 31 and the workpiece 70, improving the convenience of placement of the first driving member 31.

In some embodiments, the pressing member 33 may be made of copper which has good thermal conductivity, facilitating timely heat dissipation of the workpiece 70 when the workpiece 70 is welded. Of course, the present application is not limited to this. In other embodiments, the material of the pressing member 33 may alternatively be other metals or high-temperature-resistant plastics. The material of the pressing member 33 is not specifically limited in the present application.

In some embodiments, in order to improve the convenience of repairing or replacement of the pressing member 33, the pressing member 33 may be removably connected to the first driving member 31. In this case, when the pressing member 33 is connected to the bearing seat 35 as above, it may be removably connected to the bearing seat 35 by screw connection, snap-fit connection, magnetic fixation, etc. When the pressing member 33 is directly connected to the output shaft of the first driving member 31, it may also be removably connected to the output shaft of the first driving member 31 by screw connection, snap-fit connection, magnetic fixation, etc.

Referring to Fig. 3, in an embodiment of the present application, the pressing mechanism 30 and the positioning mechanism 20 are respectively located at two ends of the workpiece 70 in a height direction thereof.

By the pressing mechanism 30 and the positioning mechanism 20 being arranged at two ends of the workpiece 70 in a height direction thereof, it may also be said that the pressing mechanism 30 and the positioning mechanism 20 are distributed in the vertical direction.

In this embodiment, since the pressing mechanism 30 and the positioning mechanism 20 are distributed in the vertical direction, the workpiece 70 can be conveyed in a vertical orientation. In this case, the entire body of the workpiece 70 can be better exposed, thereby making it easier for the welding mechanism 40 to perform spin welding on the workpiece 70 placed in the vertical orientation. Of course, it should be noted that the present application is not limited to this. In other embodiments, the pressing mechanism 30 and the positioning mechanism 20 may alternatively be distributed in a horizontal direction, that is, the workpiece 70 may be alternatively conveyed in a horizontal orientation.

Referring to Figs.1 and 4, in an embodiment of the present application, the positioning mechanism 20 includes an accommodating member 21, a first accommodating groove 211 is formed on the accommodating member 21, the first accommodating groove 211 is configured to accommodate the workpiece 70, and the accommodating member 21 is connected to the transport mechanism 10.

The first accommodating groove 211 may be a structure formed by a recess on a surface of the accommodating member 21, or may be formed by a plurality of walls protruding from a surface of the accommodating member 21 fitting together in an enclosed manner. The first accommodating groove 211 may have circular, square or other shapes, and may specifically be set adaptively according to the shape of the workpiece 70.

In this embodiment, the workpiece 70 can be accommodated and limited by the first accommodating groove 211 of the accommodating member 21, thereby contributing to improving the stability of positioning the workpiece 70 by the positioning mechanism 20, so as to improve the stability of the workpiece 70 being conveyed. Of course, the present application is not limited to this. In other embodiments, the positioning mechanism 20 may also clamp and position the workpiece 70 as described above. In this case, the positioning mechanism 20 may have two clamping portions, and can clamp the workpiece 70.

Referring to Figs. 1 and 3 to 5, in an embodiment of the present application, the accommodating member 21 is further provided with an avoidance hole 213 in communication with the first accommodating groove 211. The welding device 100 further includes a push assembly 50. A part of the push assembly 50 is configured to pass through the avoidance hole 213 and drive the workpiece 70 to approach the pressing mechanism 30, such that the pressing mechanism 30 and the push assembly 50 cooperate with each other to clamp the workpiece 70.

The avoidance hole 213 may be provided in a groove wall of the first accommodating groove 211 that directly faces its groove opening, and penetrates an end of the accommodating member 21 away from the first accommodating groove 211. Since the avoidance hole 213 is configured to avoid the movement of the push assembly 50, the avoidance hole 213 may have circular, square or other shapes, and may specifically be set adaptively according to the shape and structure of the part of the push assembly 50 that passes through the avoidance hole. The push assembly 50 may be configured to provide power to drive the workpiece 70 to move in a direction close to the pressing mechanism 30, so that the push assembly 50 and the pressing mechanism 30 cooperate with each other to clamp and limit the workpiece 70. The push assembly 50 may be a structure including a second driving member, a cam 53 and a push rod 55 as mentioned below, to drive the cam 53 to rotate by driving the driving member, and then drive the push rod 55 by means of the cam 53 to pass through the avoidance hole 213, so as to drive the workpiece 70 to approach the pressing mechanism 30. Of course, the push assembly 50 may alternatively be directly configured as a pneumatic cylinder, and an extendable end of the pneumatic cylinder passes through the avoidance hole 213 to drive the workpiece 70 to approach the pressing mechanism 30.

**In** this embodiment, since the workpiece 70 is pushed by the push assembly 50, the workpiece 70 can be separated from a groove bottom wall of the first accommodating groove 211 of the accommodating member 21, so as to reduce the wear of the workpiece 70 during rotation.

It can be understood that in some embodiments, it is also possible that the positioning mechanism 20 and the pressing mechanism 30 jointly clamp the workpiece 70 for rotation at the welding station. **In** this case, the positioning mechanism 20 may clamp the workpiece 70 or may be in an interference fit with the workpiece 70 to ensure the stability of the workpiece 70 during rotation.

Referring to Figs. 3 and 4, in an embodiment of the present application, the push assembly 50 includes a second driving member, a cam 53 and a push rod 55. The cam 53 is connected to the second driving member and can be driven to rotate by the second driving member; and the push rod 55 can be abutted against and driven by the cam 53 when it rotates, so as to pass through the avoidance hole 213.

The second driving member may be configured to provide power to drive the cam 53 to rotate. The second driving member may be an electric motor. The cam 53 is a structure formed by a partial outward protrusion on a side peripheral surface of the rotating wheel. Therefore, when the cam 53 is driven and rotated by the second driving member, and an outer protrusion of a side peripheral surface of the cam 53 abuts against the push rod 55, the push rod 55 can be driven to move in a direction close to the workpiece 70; and when other areas of the side peripheral surface of the cam 53 abut against the push rod 55, the push rod 55 can be restored in a direction away from the workpiece 70. The push rod 55 may be configured to abut against and drive the workpiece 70, that is, when the push rod is abutted against the outer protrusion of the side peripheral surface of the cam 53, the push rod 55 can be driven to pass through the avoidance hole 213, and then push the workpiece 70 located in the first accommodating groove 211, so that the push rod 55 and the pressing mechanism 30 cooperate with each other to clamp and limit the workpiece 70. The push rod 55 may be a cylinder or a square prism, and the specific shape of the push rod 55 is not limited in the present application.

In this embodiment, the push assembly 50 is configured as a combination of the second driving member, the cam 53 and the push rod 55, so that there is no need to distribute the components of the push assembly 50 in sequence on the driving path of the workpiece 70, that is, the push rod 55 and the cam 53 may be distributed in the vertical direction, and the second driving member and the cam 53 may be distributed in the horizontal direction, thereby contributing to improving the compactness of distribution of the push assembly 50.

Further, referring to Figs.3 and 4, a lower end of the push rod 55 is provided with an abutment surface 551. The abutment surface 551 is configured to abut against the cam 53. The abutment surface 551 is arranged in the form of an arc-shaped surface. In this case, the push rod 55 abuts against the cam 53 by means of the abutment surface 551 arranged in the form of an arc-shaped surface, so that the wear between the push rod 55 and the cam 53 can be reduced. The abutment surface 551 may be directly formed on the lower end of the push rod 55. Of course, it is also possible that the lower end of the push rod 55 is provided with a rotatable roller 553, and the abutment surface 551 is formed by a side peripheral surface of the roller 553, to further reduce the friction between the push rod 55 and the cam 53. In order to improve the stability of the push rod 55 during movement, the push assembly 50 may further include a guide rail 57 and a guide block 59. The guide rail 57 is configured to extend in a moving direction of the push rod 55, and the guide block 59 is connected to the push rod 55, and is slidably connected to the guide rail 57. The guide rail 57 may be connected to a transport body 11 of the transport mechanism 10, that is, connected to a fixed partial structure of the transport mechanism 10. The guide block 59 may be sleeved on the outside of the push rod 55 to improve the stability of the connection between the two. The cooperation between the guide rail 57 and the guide block 59 may be in the form of a trough and a slider or pulley embedded in the trough. Of course, it is also possible that the guide rail 57 is mounted by means of an additional support frame. In addition, the upper end of the push rod 55 may be provided with a rotatable push head 555. The push head 555 is configured to abut against the workpiece 70. In this case, since the push head 555 can rotate relative to the push rod 55, only the push head 555 can be driven when abutting against the workpiece 70, without exerting any driving influence on the push rod 55. In order to improve the rotation smoothness and reduce the wear between the push head 555 and the push rod, a bearing 557 may be mounted between the push head 555 and the push rod 55.

In an embodiment of the present application, the push assembly 50 and the welding mechanism 40 can move along with the workpiece 70 on the transport mechanism 10.

By the push assembly 50 and the welding mechanism 40 can move along with the workpiece 70, it is meant that when the workpiece 70 is driven by the transport mechanism 10, the push assembly 50 and the welding mechanism 40 can also move along the transportation path of the workpiece 70. The push assembly 50 and the welding mechanism 40 may be both mounted on the transport mechanism 10 to enable the push assembly 50 and the welding mechanism 40 to move along with the workpiece 70. Of course, it is also possible that an additional driving mechanism is provided to drive the push assembly 50 and the welding mechanism 40 to move synchronously with the workpiece 70.

In this embodiment, the push assembly 50 and the welding mechanism 40 are configured to move along the transportation path of the workpiece 70, so that when the push assembly 50 and the welding mechanism 40 are working, the transport mechanism 10 does not need to stop correspondingly, contributing to further improving the work efficiency of the welding device 100. Of course, the present application is not limited to this. In other embodiments, the push assembly 50 and the welding mechanism 40 may alternatively be arranged fixed to each other. In this case, the push assembly 50 and the welding mechanism 40 may be fixed on the transport body 11 of the transport mechanism 10, that is, a fixed part of the transport mechanism 10. Of course, it is also possible that the push assembly 50 and the welding mechanism 40 are mounted by means of an additional support frame.

Referring to Figs.1 and 3, in an embodiment of the present application, the welding device 100 further includes a clamping mechanism 60. The clamping mechanism 60 clamps a side surface of the workpiece 70.

The clamping mechanism 60 is configured to clamp and limit the workpiece 70, and clamps the side surface of the workpiece 70 that is not limited, that is, the other surfaces of the workpiece 70 except those which are abutted against and limited by the pressing mechanism 30 and the push assembly 50. The clamping mechanism 60 may include two clamping members 61, three clamping members 61 or more clamping members 61, to clamp and abut against the workpiece 70 by means of the clamping members 61. The clamping members 61 may be manually driven to approach the workpiece 70 to clamp the workpiece 70. Of course, it is also possible that as mentioned below, the clamping mechanism 60 further includes third driving members 63 for driving the clamping members 61.

In this embodiment, a side peripheral surface of the workpiece 70 can be clamped and limited by the clamping mechanism 60, so that when the workpiece 70 is clamped between the pressing mechanism 30 and the push assembly 50, the clamping mechanism 60 can be used to further correct the position of the workpiece 70 in the direction perpendicular to the rotation axis of the workpiece 70, such that the workpiece can be accurately and stably at a preset welding position, thereby facilitating subsequent accurate welding of the workpiece 70 by the welding mechanism 40.

Referring to Figs.1 and 3, in an embodiment of the present application, the clamping mechanism 60 includes at least two clamping members 61. The at least two clamping members 61 are arranged on two sides of the workpiece 70.

By the at least two clamping members 61 being arranged on two sides of the workpiece 70, it is meant that there are at least two clamping members 61, and there are at least two clamping members 61 located on opposite sides of the workpiece 70 to abut against and limit the workpiece 70 bidirectionally in opposite directions.

In this embodiment, the peripheral side of the workpiece 70 can be more comprehensively clamped and limited by the at least two clamping members 61, thereby contributing to improving the clamping and limiting effect of the clamping mechanism 60 on the workpiece 70.

Referring to Figs. 3 and 4, in an embodiment of the present application, the clamping member 61 includes a fixing frame 611 and at least two clamping wheels 613. The at least two clamping wheels 613 are rotatably arranged on the fixing frame 611. The clamping wheels 613 of the at least two clamping members 61 enclose a clamping space 65 for clamping the workpiece 70.

The fixing frame 611 may be configured to provide mounting positions for mounting the clamping wheels 613. The fixing frame 611 may alternatively be of a plate structure, a column structure, or a combined structure of a plate and a column. The specific structure of the fixing frame 611 is not limited in the present application. The clamping wheel 613 may be configured to abut against the side surface of the workpiece 70, and the clamping wheel 613 can rotate relative to the fixing frame 611 around an axis parallel to the rotation axis of the workpiece 70, so that there is rolling friction between the workpiece 70 and the abutting wheel.

In this embodiment, the clamping mechanism 60 can abut against the workpiece 70 by means of the clamping wheels 613, and the clamping wheels 613 can rotate to implement rolling friction between the workpiece 70 and the abutting wheels, so that it is possible to prevent the clamping mechanism 60 from causing wear on the surface of the workpiece 70 when clamping and abutting against the side surface of the workpiece 70. Of course, it should be noted that the present application is not limited to this. In other embodiments, the clamping members 61 may alternatively be of a plate structure and may be provided with a trough that is adapted to and abutted against the side surface of the workpiece 70.

Referring to Figs. 3 and 4, in an embodiment of the present application, the clamping mechanism 60 further includes at least two third driving members 63. Each of the third driving members 63 is connected to one of the clamping members 61, and the at least two third driving members 63 can respectively drive the at least two clamping members 61 to approach each other so as to clamp the side peripheral surface of the workpiece 70.

The third driving members 63 may be configured to provide power to drive the clamping members 61 to approach the workpiece 70 to clamp the side surface of the workpiece 70. The third driving members 63 may be pneumatic cylinders, linear motors, linear modules, etc., which can drive the clamping members 61 to approach the workpiece 70 to complete the clamping of the workpiece 70, and drive the clamping members 61 to move away from the workpiece 70 to release the clamping of the workpiece 70 after the welding on the workpiece 70 is completed. When the clamping member 61 includes the fixing frame 611 and the clamping wheels 613, the fixing frame 611 of the clamping member 61 is connected to the third driving member 63.

In this embodiment, driving the clamping members 61 by the third driving members 63 can implement the automatic driving of the clamping members 61, thereby contributing to improving the automation level of the welding device 100 and further improving the work efficiency of the welding device 100. Of course, it should be noted that the present application is not limited to this. In other embodiments, the clamping members 61 can alternatively be directly manually driven to approach the workpiece 70. In addition, when the push assembly 50 and the welding mechanism 40 can move along with the workpiece 70 on the transport mechanism 10, the clamping mechanism 60 can also move along the transportation path of the workpiece 70.

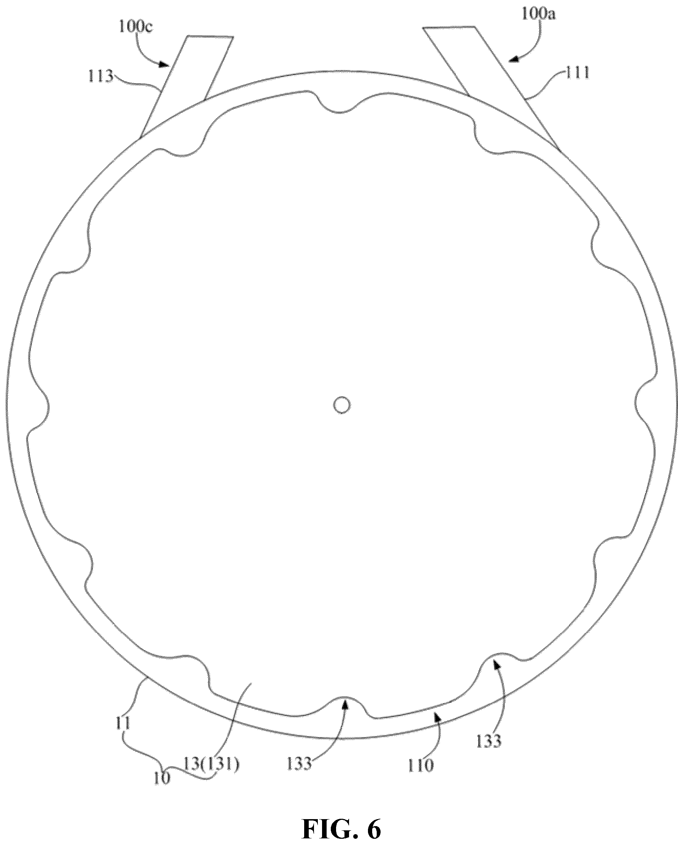

Referring to Figs. 1 and 6, in an embodiment of the present application, an annular feeding track is formed on the transport mechanism 10.

The feeding track is the transportation path of the workpiece 70. The annular shape means that the feeding track is non-linear and encloses an unclosed shape. For example, it may be a roughly circular or square path. In this embodiment, the feeding track of the transport mechanism 10 is annular, so that the mechanisms of the welding device 100 can be correspondingly distributed more compactly, thereby contributing to reducing the footprint of the welding device 100 and improving the convenience of its placement.

Referring to Fig. 1, in an embodiment of the present application, the transport mechanism 10 includes a transport body 11 and a rotating mechanism 13. An annular feeding channel 110 is formed on the transport body 11 in a circumferential direction thereof, and the positioning mechanism 20 is accommodated in the feeding channel 110. The rotating mechanism 13 can rotate relative to the transport body 11, and the rotating mechanism 13 is connected to the positioning mechanism 20 to drive the positioning mechanism 20 to move.

The transport body 11 may be used as the main structure of the transport mechanism 10 to form the feeding channel 110 and mount the rotating mechanism 13. The transport body 11 may be disk-shaped to adaptively form an annular feeding channel 110 in the circumferential direction thereof. The feeding channel 110 may be configured to accommodate and guide the conveying of the positioning mechanism 20, so that the positioning workpiece 70 is conveyed along a preset path. The rotating mechanism 13 may be configured to provide power to drive the positioning mechanism 20 to move, so as to implement the transportation of the workpiece 70 between the loading station 100a, the welding station 100b and the unloading station 100c.

In this embodiment, the feeding channel 110 of the transport body 11 can function to guide and limit the positioning mechanism 20, thereby contributing to improving the stability of the positioning mechanism 20 during the transportation. The rotating mechanism 13 may be configured to drive the positioning mechanism 20 to move, and the driving, guide and limiting on the positioning mechanism 20 are implemented by different mechanisms, so that the split arrangement of the transport mechanism 10 contributes to improving the convenience of its arrangement. Of course, the present application is not limited to this. In other embodiments, the transport mechanism 10 can alternatively be directly in the form of a turntable. The turntable is provided with a plurality of grooves in the circumferential direction to carry and limit the positioning mechanism 20, and when rotating, drives the positioning mechanism 20 to rotate accordingly.

Referring to Figs. 1 and 6, in an embodiment of the present application, the transport body 11 is further provided with an intake channel 111 and a discharge channel 113 which are in communication with the feeding channel 110, the intake channel 111 is located at the loading station 100a, and the discharge channel 113 is located at the unloading station 100c.

The intake channel 111 refers to a channel for the workpiece 70 to directly enter the feeding channel 110. Similarly, the discharge channel 113 refers to a channel for the workpiece 70 to be directly conveyed out of the feeding channel 110. Therefore, the intake channel 111 and the discharge channel 113 each may be provided with a conveying line, to convey the positioning mechanism 20 and the workpiece 70 into the intake channel 111, or to receive the positioning mechanism 20 and the workpiece 70 conveyed out of the discharge channel 113, so as to convey the positioning mechanism and the workpiece to a collection station or another processing station.

In this embodiment, the arrangement of the intake channel 111 and the discharge channel 113 facilitates the conveying of the positioning mechanism 20 and the workpiece 70 into and out of the transport mechanism 10, and can improve the conveying efficiency of the positioning mechanism 20 and the workpiece 70 by the transport mechanism 10, thereby contributing to further improving the work efficiency of the welding device 100. Of course, the present application is not limited to this. In other embodiments, when the intake channel 111 and the discharge channel 113 are not provided, loading and unloading may alternatively be performed manually or by a robot, etc.

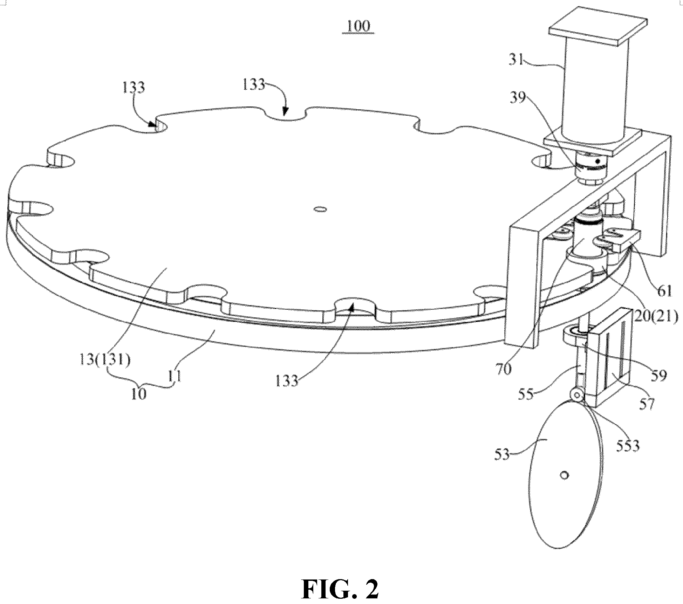

Referring to Figs. 1 and 2, in an embodiment of the present application, the rotating mechanism 13 includes a rotating disk 131. The rotating disk 131 is rotatable. A second accommodating groove 133 is formed on the rotating disk 131. The second accommodating groove 133 is configured to accommodate the workpiece 70 located in the feeding channel 110.

By the rotating disk 131 being rotatable, it is meant that the rotating disk 131 may be rotated manually or may be driven to rotate by an electric motor, in which case the rotating mechanism 13 may further include the electric motor for driving the rotating disk 131. The second accommodating groove 133 may be configured to accommodate the workpiece 70, thereby facilitating the workpiece 70 to be driven when the rotating disk 131 rotates.

In this implementation, the workpiece 70 can be accommodated by the second accommodating groove 133, so as to improve the stability of the workpiece 70 when it is driven to move while enabling the workpiece 70 to be abutted and driven. Of course, the present application is not limited to this. In other embodiments, it is also possible that the rotating disk 131 is be provided with an abutment member, which is configured to extend in a radial direction of the rotating disk 131 and can abut against the side surface of the workpiece 70 when the rotating disk 131 rotates, so as to drive the workpiece 70 to move.

Referring to Fig. 2, in an embodiment of the present application, an edge of the rotating disk 131 is recessed to form the second accommodating groove 133.

By an edge of the rotating disk 131 being recessed to form the second accommodating groove 133, it is meant that the second accommodating groove 133 penetrates a side peripheral surface of the rotating disk 131.

In this embodiment, the second accommodating groove 133 is recessed from the edge of the rotating disk 131, so that the second accommodating groove 133 forms a notch structure on the edge of the rotating disk 131. In this case, there is no need to use other additional mechanisms to drive the workpiece 70 into the second accommodating groove 133, thereby contributing to improving the convenience of the workpiece 70 entering the second accommodating groove. Of course, the present application is not limited to this. In other embodiments, when the second accommodating groove 133 penetrates two surfaces of the rotating disk 131 in an axial direction, the workpiece 70 may be placed manually or by a robot into the second accommodating groove 133.

Referring to Fig. 1, in an embodiment of the present application, the pressing mechanism 30 is located on one side of the rotating mechanism 13 in a height direction thereof.

The pressing mechanism 30 is arranged on one side in the height direction, it may also be said that the pressing mechanism 30 is arranged on one side of the rotating mechanism 13 in the vertical direction, that is, above or below the rotating mechanism.

In this embodiment, the arrangement of the pressing mechanism 30 above or below the rotating mechanism 13 can make the distribution of the pressing mechanism 30 and the rotating mechanism 13 more compact, thereby contributing to further reducing the footprint of the welding device 100 and improving the convenience of its subsequent placement. When the pressing mechanism 30 is arranged on one side of the rotating mechanism 13 in the height direction, the push assembly 50 may be arranged on the other side of the rotating mechanism in the height direction.

In an embodiment of the present application, the workpiece 70 is a columnar battery cell.

In this embodiment, the workpiece 70 is a columnar battery cell, so that it has a good contact area with both the positioning mechanism 20 and the pressing mechanism 30, thereby facilitating the positioning mechanism 20 to position the battery cell and the pressing mechanism 30 to press the battery cell. Further, the workpiece 70 may specifically be a cylindrical battery cell. In this case, since the workpiece 70 is cylindrical, its entire body is consistent, which facilitates the welding mechanism 40 to perform spin welding on its entire body. Of course, the present application is not limited to this. In other embodiments, the workpiece 70 may alternatively be a square columnar battery cell, or even not a battery cell, but some other boxes, products, etc.

Referring to Figs. 1 to 6, in an embodiment of the present application, a welding device 100 includes a loading station 100a, a welding station 100b and an unloading station 100c. The welding device 100 further includes a transport mechanism 10, a positioning mechanism 20, a pressing mechanism 30, a push assembly 50, a clamping mechanism 60, and a welding mechanism 40. The transport mechanism 10 is configured to transport a workpiece 70 between the loading station 100a, the welding station 100b and the unloading station 100c. The transport mechanism 10 may include a transport body 11 and a rotating mechanism 13. An annular feeding channel 110 is formed on the transport body 11 in a circumferential direction thereof, and the positioning mechanism 20 is accommodated in the feeding channel 110. The rotating mechanism 13 can rotate relative to the transport body 11, and the rotating mechanism 13 is connected to the positioning mechanism 20 to drive the positioning mechanism 20 to move. The transport body 11 is further provided with an intake channel 111 and a discharge channel 113 which are in communication with the feeding channel 110, the intake channel 111 is located at the loading station 100a, and the discharge channel 113 is located at the unloading station 100c. The rotating mechanism 13 includes a rotating disk 131. The rotating disk 131 is rotatable, and an edge of the rotating disk 131 is recessed to form a second accommodating groove 133. The positioning mechanism 20 is configured to position the workpiece 70 when the workpiece 70 is transported between the loading station 100a, the welding station 100b and the unloading station 100c. The positioning mechanism 20 is arranged on the transport mechanism 10. The positioning mechanism 20 includes an accommodating member 21, a first accommodating groove 211 is formed on the accommodating member 21, the first accommodating groove 211 is configured to accommodate the workpiece 70, and the accommodating member 21 is connected to the transport mechanism 10. The accommodating member 21 is further provided with an avoidance hole 213 in communication with the first accommodating groove 211. A part of the push assembly 50 is configured to pass through the avoidance hole 213 and drive the workpiece 70 to approach the pressing mechanism 30, such that the pressing mechanism 30 and the push assembly 50 cooperate with each other to clamp the workpiece 70. The push assembly 50 includes a second driving member, a cam 53 and a push rod 55. The cam 53 is connected to the second driving member and can be driven to rotate by the second driving member; and the push rod 55 can be abutted against and driven by the cam 53 when it rotates, so as to pass through the avoidance hole 213 and cooperate with the pressing mechanism 30 to clamp opposite ends of the workpiece 70. A lower end of the push rod 55 is provided with an abutment surface 551. The abutment surface 551 is configured to abut against the cam 53. The abutment surface 551 is arranged in the form of an arc-shaped surface. The push assembly 50 further includes a guide rail 57 and a guide block 59. The guide rail 57 is configured to extend in a moving direction of the push rod 55, and the guide block 59 is connected to the push rod 55, and is slidably connected to the guide rail 57. The upper end of the push rod 55 is provided with a rotatable push head 555. The push head 555 is configured to abut against the workpiece 70. The pressing mechanism 30 may be further configured to drive the workpiece 70 to rotate, such that the welding mechanism 40 performs spin welding on the workpiece 70. The pressing mechanism 30 includes a first driving member 31 and a pressing member 33. The pressing member 33 is connected to the first driving member 31 and cooperates with the positioning mechanism 20 to clamp the workpiece 70. The first driving member 31 can drive the pressing member 33 to rotate and then drive the workpiece 70 to be spin welded. The pressing mechanism 30 and the positioning mechanism 20 are respectively located at two ends of the workpiece 70 in a height direction thereof. The clamping mechanism 60 is arranged at the welding station 100b and configured to clamp a side surface of the workpiece 70. The clamping mechanism 60 includes at least two clamping members 61. The at least two clamping members 61 are arranged on two sides of the workpiece 70. The clamping member 61 includes a fixing frame 611 and at least two clamping wheels 613. The at least two clamping wheels 613 are rotatably arranged on the fixing frame 611. The clamping wheels 613 of the at least two clamping members 61 enclose a clamping space 65 for clamping the workpiece 70. The clamping mechanism 60 further includes at least two third driving members 63. Each of the third driving members 63 is connected to one of the clamping members 61, and the at least two third driving members 63 can respectively drive the at least two clamping members 61 to approach each other so as to clamp the side peripheral surface of the workpiece 70. The welding mechanism 40 is arranged at the welding station 100b and configured to weld the workpiece 70.

In an embodiment of the present application, a working process of the welding device 100 in the present application may lie in that after the positioning mechanism 20 and the workpiece 70 accommodated in the first accommodating groove 211 of the positioning mechanism 20 enter the feeding channel 110 of the transport mechanism 10 from the intake channel 110, the rotating disk 131 of the transport mechanism 10 can accommodate, abut against and drive the workpiece 70 by means of the second accommodating groove 133, so as to transport the workpiece 70 between the loading station 100a, the welding station 100b and the unloading station 100c. When the workpiece 70 is transported to the welding station 100b, the second driving member of the push assembly 50 can drive the cam 53 to rotate, and then the cam 53 abuts against and drives the push rod 55 such that the push rod 55 can pass through the avoidance hole 213 of the accommodating member 21 to drive the workpiece 70 to move in a direction close to the pressing mechanism 30, so that the push assembly 50 and the pressing mechanism 30 clamp and limit opposite ends of the workpiece 70. Next, the third driving members 63 of the clamping mechanism 60 can drive the clamping members 61 to approach the workpiece 70, such that the clamping mechanism 60 clamps the side surface of the workpiece 70, to further correct and limit the position of the workpiece 70. Next, the welding mechanism 40 can perform welding work on the workpiece 70, and at the same time, the first driving member 31 of the pressing mechanism 30 can drive the pressing member to rotate, and the pressing member 33 drives the workpiece 70 to rotate, to enable the welding mechanism 40 to perform spin welding on the workpiece 70. Next, the welding mechanism 40 and the first driving member 31 of the pressing mechanism 30 both stop working. The clamping mechanism 60 then can release the clamping of the workpiece 70, the push rod 55 of the push assembly 50 can also be restored, and the transport mechanism 10 can transport the workpiece 70 to the discharge channel 113.

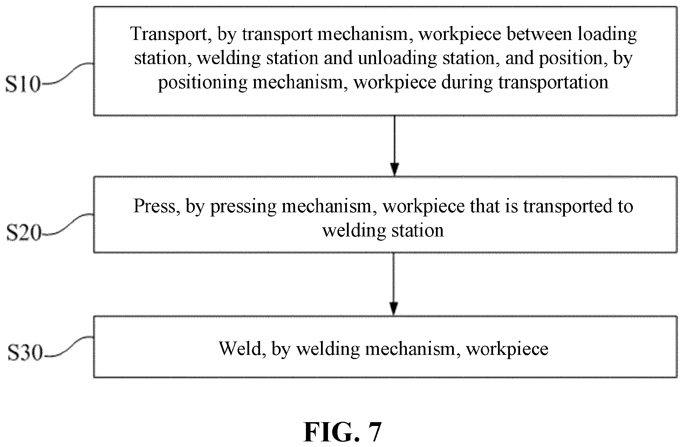

Referring to Fig. 7, the present application also proposes a method for using a welding device. The specific structure of the welding device 100 can refer to the above embodiments. In an embodiment of the present application, the method for using a welding device may include the following steps.

In step S10, the transport mechanism 10 transports a workpiece 70 between the loading station 100a, the welding station 100b and the unloading station 100c, and the positioning mechanism 20 positions the workpiece 70 during transportation.

In step S20, the pressing mechanism 30 presses the workpiece 70 that is transported to the welding station 100b.

In step S30, the welding mechanism 40 welds the workpiece 70.

In this solution, the workpiece is transported between the loading station 100a, the welding station 100b and the unloading station 100c by the transport mechanism 10, and the workpiece 70 is positioned by one positioning mechanism 20. In this way, the placement posture of the workpiece 70 at each station can be consistent, so that when the welding device 100 performs corresponding processing at each station, there is no need to replace the positioning mechanism 20 for the workpiece and adjust the placement posture of the workpiece 70, the continuity of processing the workpiece 70 by the welding device 100 can be improved, thereby improving the work efficiency of the welding device 100.

The above are only preferred embodiments of the present application, but is not intended to limit the patent scope of the present application. Under the inventive concept of the present application, any equivalent structures and variations made using the description and accompanying drawings of the present application, which are directly/indirectly applied in other relevant technical fields, should fall within the scope of patent protection of the present application.

## Claims

1. A welding device, comprising a loading station, a welding station and an unloading station, the welding device further comprises:
a transport mechanism configured to transport a workpiece between the loading station, the welding station and the unloading station;
a positioning mechanism configured to position the workpiece when the workpiece is transported between the loading station, the welding station and the unloading station, the positioning mechanism being arranged on the transport mechanism;
a pressing mechanism arranged at the welding station and configured to press the workpiece during welding, the pressing mechanism and the positioning mechanism being arranged at opposite ends of the workpiece; and
a welding mechanism arranged at the welding station and configured to weld the workpiece.

2. The welding device according to claim 1, wherein the welding mechanism is configured to perform spin welding on the workpiece.

3. The welding device according to claim 2, wherein the welding mechanism comprises:
a rotating driving member; and
a welding member connected to the rotating driving member, wherein the rotating driving member drives the welding member to rotate to perform spin welding on the workpiece.

4. The welding device according to claim 2, wherein the pressing mechanism is further configured to be capable of driving the workpiece to rotate, such that the welding mechanism performs spin welding on the workpiece.

5. The welding device according to claim 4, wherein the pressing mechanism comprises:
a first driving member; and
a pressing member connected to the first driving member and configured to abut against the workpiece, wherein the first driving member is capable of driving the pressing member to rotate and then driving the workpiece to be spin welded.

6. The welding device according to claim 5, wherein the pressing mechanism further comprises a bearing seat, a connecting shaft and a coupling, wherein the bearing seat is connected to the pressing member, and the connecting shaft has one end connected to the bearing seat and the other end connected to an output shaft of the first driving member via the coupling;
and/or the pressing member is removably connected to the first driving member;
and/or the pressing member is made of copper.

7. The welding device according to any one of claims 1 to 6, wherein the pressing mechanism and the positioning mechanism are respectively located at two ends of the workpiece in a height direction thereof.

8. The welding device according to any one of claims 1 to 7, wherein the positioning mechanism comprises an accommodating member on which a first accommodating groove is formed, the first accommodating groove is configured to accommodate the workpiece, and the accommodating member is connected to the transport mechanism.

9. The welding device according to claim 8, wherein the accommodating member is further provided with an avoidance hole in communication with the first accommodating groove, and the welding device further comprises a push assembly, wherein
a part of the push assembly is configured to be capable of passing through the avoidance hole and driving the workpiece to approach the pressing mechanism, such that the pressing mechanism and the push assembly cooperate with each other to clamp the workpiece.

10. The welding device according to claim 9, wherein the push assembly comprises:
a second driving member;
a cam connected to the second driving member and capable of being driven to rotate by the second driving member; and
a push rod capable of being abutted against and driven by the cam to pass through the avoidance hole when the cam rotates.

11. The welding device according to claim 10, wherein a lower end of the push rod is provided with an abutment surface configured to abut against the cam and arranged in the form of an arc-shaped surface;
and/or the push assembly further comprises a guide rail and a guide block, wherein the guide rail is configured to extend in a moving direction of the push rod, and the guide block is connected to the push rod and is slidably connected to the guide rail;
and/or an upper end of the push rod is provided with a rotatable push head configured to abut against the workpiece.

12. The welding device according to any one of claims 9 to 11, wherein the push assembly and the welding mechanism are movable along with the workpiece on the transport mechanism.

13. The welding device according to any one of claims 1 to 12, further comprising a clamping mechanism for clamping a side surface of the workpiece.

14. The welding device according to claim 13, wherein the clamping mechanism comprises at least two clamping members arranged on two sides of the workpiece.

15. The welding device according to claim 14, wherein each of the clamping members comprises a fixing frame and at least two clamping wheels, wherein the at least two clamping wheels are rotatably arranged on the fixing frame, the clamping wheels of the at least two clamping members enclose a clamping space for clamping the workpiece.

16. The welding device according to claim 14, wherein the clamping mechanism further comprises at least two third driving members, each of the third driving members is connected to one of the clamping members, and the at least two third driving members are capable of respectively driving the at least two clamping members to approach each other so as to clamp a side peripheral surface of the workpiece.

17. The welding device according to any one of claims 1 to 16, wherein an annular feeding track is formed on the transport mechanism.

18. The welding device according to claim 17, wherein the transport mechanism comprises:
a transport body, an annular feeding channel being formed on the transport body in a circumferential direction thereof, and the positioning mechanism being accommodated in the feeding channel; and
a rotating mechanism, the rotating mechanism being rotatable relative to the transport body, and the rotating mechanism being connected to the positioning mechanism to drive the positioning mechanism to move.

19. The welding device according to claim 18, wherein the transport body is further provided with an intake channel and a discharge channel which are in communication with the feeding channel, the intake channel is located at the loading station, and the discharge channel is located at the unloading station.

20. The welding device according to claim 18 or 19, wherein the rotating mechanism comprises a rotating disk that is rotatable, and a second accommodating groove is formed on the rotating disk and configured to accommodate the workpiece located in the feeding channel.

21. The welding device according to claim 20, wherein an edge of the rotating disk is recessed to form the second accommodating groove.

22. The welding device according to any one of claims 18 to 21, wherein the pressing mechanism is located on one side of the rotating mechanism in a height direction thereof.

23. The welding device according to any one of claims 1 to 22, wherein the workpiece is a columnar battery cell.

24. The welding device according to claim 23, wherein the workpiece is a cylindrical battery cell.

25. A method for using a welding device, the welding device being a welding device according to any one of claims 1 to 24, wherein the method for using a welding device comprises:
transporting, by the transport mechanism, a workpiece between the loading station, the welding station and the unloading station, and positioning, by the positioning mechanism, the workpiece during transportation;
pressing, by the pressing mechanism, the workpiece that is transported to the welding station; and
welding, by the welding mechanism, the workpiece.
